# EUROPEAN PATENT APPLICATION

(11) **EP 3 744 802 A1**
(43) Date of publication of application: **02.12.2020**
(21) Application number: 20174458.8
(22) Date of filing: 13.05.2020
(51) Int. Cl.: C09J 9/00, C09J 123/08, C09J 123/00

(54) **SOLID ADHESIVE**

(30) Priority: 17.05.2019 JP 2019093554
(71) Applicant: Tombow Pencil Co., Ltd., Tokyo 114-8583 (JP); University of Hyogo, Kobe-shi, Hyogo 651-2197 (JP)
(72) Inventor: SAKATO, Motoya, Tokyo, Tokyo 114-8583 (JP); SAKAMOTO, Akihiro, Tokyo, Tokyo 114-8583 (JP); AOKI, Kazuhisa, Tokyo, Tokyo 114-8583 (JP); KISHI, Hajime, Hyogo, Hyogo 671-2280 (JP)
(74) Representative: Hoefer & Partner Patentanwälte mbB

(57) **Abstract**

Provided is a solid adhesive that has an excellent finish of a coated surface of an adherend, has light coating feeling, and is also capable of adhering to paper, wood, cloth, and the like. The solid adhesive contains water, an organic solvent, a dibenzalide of pentavalent to hexavalent sugar alcohol as a gelation agent, and a polyvinyl formal resin and a polyvinyl butyral resin, and further contains an adhesive resin such as a polyvinyl pyrrolidone resin, and a feed type solid adhesive includes a feeding container that is filled with the solid adhesive are provided.

## Description

### Technical Field

The present invention relates to a solid adhesive.

### Background Art

Recently, DIY (making a workpiece by oneself) has been prosperous, and an adhesive that is capable of adhering to not only paper but also wood or cloth has been required. However, a general adhesive is a liquid, and thus, has problems in use, such as dripping or easily contaminating hands.

For this reason, a solid adhesive has been proposed so far (for example, refer to Patent Document 1). A water-soluble resin polymer (a mixture of polyvinyl pyrrolidone and polyurethane) is used as a main adhesive component, and a soap (an alkali metal salt or an ammonium salt of an aliphatic carboxylic acid) is used in a gelation agent. However, with respect to the soap gel-based solid adhesive using polyvinyl pyrrolidone and polyurethane, the surface of the adhesive is in a dried state, thereby making it difficult to attach the adhesive to an adherend, or the adhesive is ragged, thereby making it difficult to spread the adhesive on the surface of the adherend, and a solid fragment may remain on the surface of the adherend in some cases.

In contrast, a soap gel-based solid adhesive has been proposed in which attachment properties of the adhesive component with respect to the adherend are improved by using terminal-silylated urethane (Patent Document 2), but a resistance at coating may be often felt large. In addition, in such a soap gel-based solid adhesive, the soap itself is a white opaque soap, and thus, in a case where the adhesive is applied to a dark adherend, the whiteness of the adhesive is noticeable, and there is a case where the adherend is seen as being contaminated.

Further, the pH of the soap gel-based solid adhesive is on an alkali side (pH 9 to pH 13). In general, such alkalinity is not a problem since the adhesive is neutralized by carbon dioxide or the like in the air after coating, but in the adhesion of wood, there is a case where the surface of the adherend to which the adhesive is attached is discolored (so-called alkali contamination).

On the other hand, the solid adhesive using a benzylidene derivative of sorbitol in the gelation agent is basically transparent due to the constituent, and has pH in a neutral region, and thus, even in a case where the adhesive is attached to the adherend, the adherend is not seen as being contaminated or the adherend (wood) is not discolored, and the finish of the coated surface is excellent, but there is a drawback that coating feeling is hard and heavy.

A solid adhesive has been also proposed in which spherical fine particles are blended, excellent coating performance and an excellent adhesive force can be ensured with a light pressing force, and strength and coating performance do not decrease (Patent Document 3). A benzoguanamine·formaldehyde condensate or glass beads having an average particle diameter of 0.3 µm to 30 µm are used as the spherical fine particles, polyvinyl pyrrolidone or the like is used as an adhesive component, and wax that is a solid at a normal temperature and has small solubility with respect to a solvent is used together, and thus, a decrease in an effect due to long storage or use is prevented. However, a comparatively large amount of gelation agent is used in order to retain shapability, and thus, the coating feeling is hard, an adhesive edge is easily ragged, and not only a decrease in the transparency of the adhesive but also an insufficient adhesive force with respect to the adherend (paper) is caused by the wax or the spherical fine particles.

### Citation

### Patent Document

Patent Document 1: Japanese Patent No. 4,870,260
Patent Document 2: Japanese Patent No. 3,350,532
Patent Document 3: JP-A-2003-049149

### Summary of Invention

### Technical Problem

The invention has been made in consideration of the problems of the related art, and an object thereof is to provide a solid adhesive that has an excellent finish of a coated surface of an adherend without causing the adherend to be seen as being contaminated or alkali contamination, has light coating feeling, and is also capable of adhering to not only paper but also wood, cloth, or the like, and a feed type solid adhesive including a feeding container that is filled with the solid adhesive.

### Solution to Problem

As a result of intensive studies of the present inventor for attaining the object described above, it has been found that the object can be attained by using a polyvinyl formal resin, and the invention has been completed.

That is, the invention is as follows.
1) A solid adhesive, containing: water; an organic solvent; a gelation agent; and a polyvinyl formal resin.
2) The solid adhesive according to 1) described above, in which a content of the polyvinyl formal resin is 0.1 mass% to 5.0 mass%, with respect to a total amount of the solid adhesive.
3) The solid adhesive according to 1) or 2) described above, further containing: at least one polyvinyl acetal resin selected from polyvinyl acetal resins other than the polyvinyl formal resin.
4) The solid adhesive according to 3) described above, in which a ratio (a mass ratio) of the polyvinyl formal resin to the polyvinyl acetal resin is 1/99 to 50/50.
5) The solid adhesive according to 3) or 4) described above, in which the polyvinyl acetal resin is a polyvinyl butyral resin.
6) The solid adhesive according to any one of 1) to 5) described above, further containing: at least one adhesive component selected from the group consisting of a synthetic macromolecule and a natural macromolecule other than the above.
7) The solid adhesive according to 6) described above, in which the adhesive component is a polyvinyl pyrrolidone resin.
8) The solid adhesive according to any one of 1) to 7) described above, in which the gelation agent is a dibenzalide of pentavalent to hexavalent sugar alcohol.
9) A feed type solid adhesive, including:
   a feeding container that is filled with the solid adhesive according to any one of 1) to 8).
10) The feed type solid adhesive according to 9) described above, in which a hardness of the solid adhesive is in a range of 1 × 10⁻⁵ N/cm² to 15 × 10⁻⁵ N/cm².

### Advantageous Effects of the Invention

According to the invention, it is possible to provide a solid adhesive that has an excellent finish of a coated surface of an adherend without causing the adherend to be seen as being contaminated or alkali contamination, has light coating feeling, and is also capable of adhering to not only paper but also wood, cloth, or the like, and a feed type solid adhesive including a feeding container that is filled with the solid adhesive.

### Description of Embodiments

A solid adhesive according to the invention contains water, an organic solvent, a gelation agent, and a polyvinyl formal resin.

In the solid adhesive of the invention, water and the organic solvent are contained as a solvent. A ratio of water and the organic solvent is not particularly limited, and can be suitably set in consideration of a balance in adhesive properties, preservation stability, a gelation state, and the like of the solid adhesive, but the ratio of the organic solvent is preferably 50 parts by mass to 200 parts by mass, and is more preferably 100 parts by mass to 150 parts by mass, with respect to 100 parts by mass of water. By using water and the organic solvent with an excellent balance, compatibility between the gelation agent and the resin is excellent, the transparency of the solid adhesive is ensured, and the adhesive properties are improved. In addition, it is possible to suppress wrinkles on a paper surface coated with the solid adhesive.

A total amount of water and the organic solvent (the solvent) is preferably 50 mass% to 90 mass%, is more preferably 50 mass% to 85 mass%, and is particularly preferably 55 mass% to 80 mass%, with respect to a total amount of the solid adhesive. In a case where the amount of solvent is excessively small, the resin is not capable of being dissolved, and in a case where the amount of solvent is excessively large, it is difficult to prepare a solid adhesive having a suitable hardness.

The organic solvent in the solid adhesive of the invention is not particularly limited, examples thereof include lower alcohols such as ethyl alcohol and isopropyl alcohol; polyhydric alcohols such as ethylene glycol, glycerin, and 3-methyl-3-methoxy-1-butanol; aliphatic hydrocarbons such as hexane and heptane; alicyclic hydrocarbons such as cyclohexane; glycol ethers such as ethylene glycol monomethyl ether, ethylene glycol monoethyl ether, ethylene glycol monopropyl ether, ethylene glycol monobutyl ether, ethylene glycol monophenyl ether, propylene glycol monomethyl ether, propylene glycol monoethyl ether, diethylene glycol monomethyl ether, diethylene glycol monoethyl ether, diethylene glycol monoisopropyl ether, and diethylene glycol monobutyl ether; and the like, and such organic solvent can be independently used or two or more kinds thereof can be used by being mixed.

As described above, the solid adhesive of the invention contains water and the organic solvent, and thus, it is preferable that the organic solvent has high solubility with respect to water, and it is more preferable that the organic solvent is freely mixed with water. Further, in order to prevent the solvent from being evaporated from the solid adhesive that is gelated, a decrease in a coating amount due to the dry of the solid adhesive, or the degradation of coating feeling, it is particularly preferable that a boiling point of the organic solvent at a normal pressure is 100°C or higher.

From such a viewpoint, polyhydric alcohols and glycol ethers are preferable as the organic solvent, and among them, 3-methyl-3-methoxy-1-butanol, and propylene glycol monomethyl ether are more preferable, and propylene glycol monomethyl ether is particularly preferable.

In the solid adhesive of the invention, the gelation agent is used in order to gelate a mixture of the resin such as polyvinyl formal, water, and the organic solvent.

A gelation agent suitably selected from known gelation agents may be used as the gelation agent, and specific examples thereof include a dibenzalide of pentavalent to hexavalent sugar alcohol, a fatty acid derivative such as an aliphatic carboxylate and fatty acid amide, a cellulose derivative such as hydroxy ethyl cellulose and hydroxy propyl cellulose, an inorganic compound such as organic bentonite and silica, natural macromolecule polysaccharide containing carrageenan or agar, glucose, a glucuronic acid, and rhamnose as constituent sugar, and the like, and such gelation agents can be independently used or two or more kinds thereof can be used together. Among them, a dibenzalide of pentavalent to hexavalent sugar alcohol is preferable from the viewpoint of having excellent shapability in the vicinity neutral pH and enabling transparent gel to be formed.

Such a dibenzalide of sugar alcohol, for example, is a condensate of pentavalent to hexavalent sugar alcohol such as mannitol, rhamnitol, xylitol, and sorbitol, and benzaldehyde or a nucleus substitute thereof, and can be independently used or can be used as a mixture of the sugar alcohol and a monobenzalide or a tribenzalide. In particular, a dibenzalide of xylitol, sorbitol, or a mixture thereof exhibits excellent shapability.

A dibenzalide of sorbitol can be obtained as a commercially available product, and examples thereof include "Millad 3988" (manufactured by Milliken & Company), "GEL ALL D" (manufactured by New Japan Chemical co., ltd.), "GEL ALL MD" (manufactured by New Japan Chemical co., ltd.), and the like.

A preferred range of a use amount of the gelation agent is different in accordance with the kind and the amount of organic solvent and the kind and the amount of resin, but is preferably 0.5 mass% to 10 mass%, is more preferably 1 mass% to 8 mass%, and is particularly preferably 1 mass% to 5 mass%, with respect to the total amount of the solid adhesive. In a case where the use amount of the gelation agent is small, there is a concern that the gelation as the solid adhesive is insufficient, the shapability is not capable of being obtained, or the solid adhesive collapses at the time of coating. On the other hand, in a case where the use amount is large, the solid adhesive becomes hard, and it is difficult to obtain a sufficient coating amount for adhesion at the time of coating.

In the invention, the resin is mainly used in order to impart the adhesive properties to the solid adhesive, and it is possible to attain light coating feeling by using the polyvinyl formal resin. The polyvinyl formal resin represented by General Formula (1) described below is a resin that is obtained by the formalization of polyvinyl alcohol, and is insoluble in water (20 ± 15°C) at normal temperature. A weight average molecular weight of the polyvinyl formal resin is preferably 10,000 to 250,000, is more preferably 20,000 to 200,000, and is particularly preferably 40,000 to 150,000. In a case where the molecular weight is excessively small, a coating resistance reduction effect (light coating feeling) is impaired, whereas in a case where the molecular weight is excessively large, pressure-sensitive adhesive properties with respect to an adherend (a pressure-sensitive adhesive force before an adhesive component is solidified) tend to decrease.

In addition, it is preferable that in the polyvinyl formal resin, the content of a hydroxyl group is 10 mass% or less, and the content of an acetic acid group is 5 mass% to 15 mass%.

Only one kind of the polyvinyl formal resins can be independently used, or two or more kinds thereof having different molecular weights or different contents of the hydroxyl group can be used by being mixed.

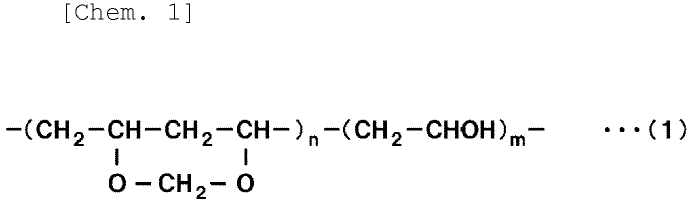

A preferred range of a use amount of the polyvinyl formal resin is different in accordance with the kind and the amount of organic solvent and the kind of resin, but is preferably 0.1 mass% to 5.0 mass%, is more preferably 0.25 mass% to 3.5 mass%, and is particularly preferably 0.5 mass% to 2.5 mass%, with respect to the total amount of the solid adhesive. In a case where the use amount is 0.1 mass% or more, it is possible to obtain the coating resistance reduction effect, and in a case where the use amount is 5.0 mass% or less, the compatibility of the solvent and the resin is not degraded.

The polyvinyl formal resin can be obtained as a commercially available product, and examples thereof include "VINYLEC" (manufactured by JNC Corporation), "Vinylec-F" (manufactured by SIVA CHEMICAL INDUSTRIES), and the like.

In the invention, it is preferable that the polyvinyl formal resin and at least one kind of polyvinyl acetal resin selected from polyvinyl acetal resins other than the polyvinyl formal resin are used together as the resin.

The polyvinyl acetal resin is a general term for resins obtained by acetalizing polyvinyl alcohol with aldehyde. Examples of the polyvinyl acetal resin include a polymer having a vinyl acetal unit represented by General Formula (2) described below as a main unit and a vinyl alcohol unit or the like as a repeating unit, and include a polyvinyl acetoacetal resin (R₁ in General Formula (2) is a methyl group), a polyvinyl propyral resin (R₁ in General Formula (2) is an ethyl group), a polyvinyl butyral resin (R₁ in General Formula (2) is a propyl group), and the like. 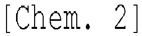 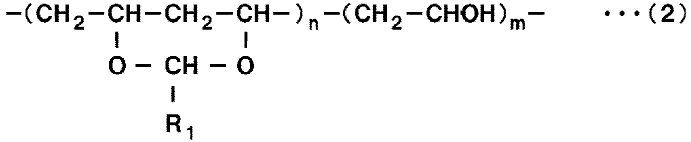 (R₁ represents an alkyl group.)

Among such resins, the polyvinyl butyral resin is preferable from the viewpoint of improving availability, the compatibility with respect to the solvent or the resin, and the shapability. The polyvinyl butyral resin is a copolymer of vinyl butyral, vinyl acetate, and vinyl alcohol, various kinds of polyvinyl butyral resins having different degrees of polymerization or different amounts of hydroxyl group can be used, and only one kind of the polyvinyl butyral resin can be independently used or two or more kinds thereof can be used together.

A preferred range of a use amount of the polyvinyl butyral resin is different in accordance with the kind and the amount of organic solvent and the kind of resin, but is preferably 1 mass% to 20 mass%, is more preferably 5 mass% to 15 mass%, and is particularly preferably 8 mass% to 12 mass%, with respect to the total amount of the solid adhesive.

The polyvinyl butyral resin can be obtained as a commercially available product, and specific examples thereof include S-LEC BL-1 (a calculated molecular weight of 1.9 × 10⁴ and 36 mol% of a hydroxyl group), S-LEC BL-2 (a calculated molecular weight of 2.7 × 10⁴ and 36 mol% of a hydroxyl group), S-LEC BM-1 (a calculated molecular weight of 4.0 × 10⁴ and 34 mol% of a hydroxyl group), S-LEC BM-2 (a calculated molecular weight of 5.2 × 10⁴ and 31 mol% of a hydroxyl group), S-LEC BM-S (a calculated molecular weight of 5.3 × 10⁴ and 22 mol% of a hydroxyl group), S-LEC BM-SZ (a calculated molecular weight of 5.3 × 10⁴ and 22 mol% of a hydroxyl group), S-LEC BH-3 (a calculated molecular weight of 11.0 × 10⁴ and 34 mol% of a hydroxyl group), S-LEC BH-6 (a calculated molecular weight of 9.2 × 10⁴ and 30 mol% of a hydroxyl group), S-LEC KX-1 (a calculated molecular weight of 17.5 × 10⁴ and 80 mol% of a hydroxyl group), S-LEC KX-5 (a calculated molecular weight of 10 × 10⁴ and 80 mol% of a hydroxyl group), S-LEC KW-1 (a calculated molecular weight of 3.0 × 10⁴ and 80 mol% of a hydroxyl group), S-LEC KW-3 (a calculated molecular weight of 3.0 × 10⁴ and 80 mol% of a hydroxyl group), S-LEC KW-10 (a calculated molecular weight of 3.0 × 10⁴ and 80 mol% of a hydroxyl group) (all are manufactured by SEKISUI CHEMICAL CO., LTD.), and the like. The calculated molecular weight indicates a weight average molecular weight that is obtained from a weight average molecular weight of polyvinyl alcohol that is a raw material.

A weight average molecular weight of the polyvinyl butyral resin depends on a molecular weight of polyvinyl alcohol that is a raw material. The weight average molecular weight of the polyvinyl butyral resin that is used in the invention is preferably 5,000 to 500,000, is more preferably 10,000 to 300,000, and is particularly preferably 20,000 to 100,000. It is preferable that the polyvinyl butyral resin is a polyvinyl butyral resin that is soluble in a mixed solution of Water/Organic Solvent, and it is most preferable that the polyvinyl butyral resin is a polyvinyl butyral resin in which the viscosity of 20 mass% of an aqueous solution at 25°C is 100 mPa·s to 5000 mPa·s.

In a case where the polyvinyl formal resin and the polyvinyl acetal resin are used together, a ratio (a mass ratio) of the polyvinyl formal resin to the polyvinyl acetal resin is preferably in a range of 1/99 to 50/50, is more preferably in a range of 3/97 to 40/60, and is particularly preferably in a range of 5/95 to 25/75, in terms of a solid content. In a case where the ratio of the polyvinyl formal resin is excessively high, the adhesive properties with respect to the adherend tend to decrease, and on the contrary, in a case where the ratio of the polyvinyl formal resin is excessively low, the coating resistance reduction effect decreases.

In the solid adhesive of the invention, an adhesive force is improved while the effect of light coating feeling is obtained, by using the polyvinyl formal resin and the polyvinyl butyral resin together, compared to a case where the polyvinyl formal resin is independently used. For this reason, the solid adhesive is more suitable for an adherend such as not only paper but also wood or cloth.

In the invention, in order to improve the adhesive properties of the solid adhesive, known adhesive resins may be further contained. A synthetic macromolecule or a natural macromolecule that has film formability and is soluble or dispersible in water can be used as the adhesive resin.

Specific examples of the adhesive resin include a synthetic macromolecule such as polyvinyl alcohol (a partially saponified product or a completely saponified product), polyvinyl acetate, a vinyl acetate copolymer (a comonomer; ethylene, propylene, a crotonic acid, an acrylic acid, a methacrylic acid, a maleic acid, acrylamide, and the like) and a saponified product thereof, a polyacrylate, polyacrylamide, polyhydroxy ethyl methacrylate, polyethylene glycol, polypropylene glycol, polyvinyl pyrrolidone, polyethylene imine, polyvinyl methyl ether, and an acryl resin emulsion (a polymer; a homopolymer or a copolymer of acrylic acid ester or methacrylic acid ester, specifically, a copolymer that mainly contains ethyl acrylate, butyl acrylate, and 2-ethyl hexyl acrylate and is copolymerized with methacrylic acid ester, styrene, acrylonitrile, vinyl acetate, and the like), a natural macromolecule such as methyl cellulose, ethyl cellulose, hydroxy propyl cellulose, carboxy methyl cellulose, sodium alginate, locust bean gum, tragacanth gum, gum arabic, gelatin, dextrin, cornstarch, ethoxylated and propoxylated starch, carboxy methyl starch, and other starch derivatives thereof, and enzyme-modified starch, and the like. Such adhesive resins may be independently used or two or more kinds thereof may be used together.

A preferred range of a use amount of the adhesive resin is different in accordance with the kind and the amount of organic solvent and the kind of resin, but is preferably 10 mass% to 50 mass%, is more preferably 15 mass% to 50 mass%, and is particularly preferably 18 mass% to 40 mass%, with respect to the total amount of the solid adhesive. In a case where the content of the adhesive resin is excessively large, it is difficult to homogeneously mix the adhesive resin into the organic solvent, whereas in a case where the content of the adhesive resin is excessively small, there is a concern that a desired adhesive force is not capable of being obtained or a sufficient hardness as the solid adhesive is not capable of being obtained.

Among the adhesive resins, polyvinyl pyrrolidone is preferable from the viewpoint of having high compatibility with respect to various solvents or resins and high pressure-sensitive adhesive properties. In addition, polyvinyl pyrrolidone is also excellent in film-forming performance in water and the organic solvent.

Polyvinyl pyrrolidone can be obtained as a commercially available product, and preferred specific examples thereof include PVP K-15, PVP K-30, PVP K-90, and PVP K-120 (all are manufactured by Ashland Japan., Co., Ltd.), PITZCOL K-30 and PITZCOL K-90 (all are manufactured by DKS Co. Ltd.), polyvinyl pyrrolidone K-30 and polyvinyl pyrrolidone K-90 (all are manufactured by Nippon Shokubai Co., Ltd.), and the like. Note that, a weight average molecular weight of polyvinyl pyrrolidone may be suitably selected from a range of 5,000 to 3,000,000, and a product may be in the shape of a powder, a granule, or a liquid.

A colorant or a pigment, a fragrance, an antifungal agent, an antiseptic agent, and the like can be added to the solid adhesive, in addition to water, the organic solvent, the adhesive component, and the gelation agent, within a range not impairing the effects of the invention. Further, a plasticizer, a lubricant, a wetting agent, an extending agent, a moisturizing agent, a surfactant, an emulsifier, for example, triethylene glycol, tetraethylene glycol, sorbit, mannite, glucose, low-molecular weight polyethylene glycol, glycerin, sodium hyaluronate, and the like can be added as an auxiliary agent.

In the case of preparing the solid adhesive according to the invention, the adhesive component, the gelation agent, and other components, and the residual amount of water and organic solvent are put in a mixing machine that is adjusted to 40°C to 120°C, and are mixed at a stirring rate of 50 rpm to 300 rpm for approximately 10 minutes to 120 minutes to obtain a homogeneous mixture, and thus, a material for mold injection is obtained.

The material injected into a mold is solidified while being cooled, and thus, the solid adhesive is obtained. A cooling method of the material may be slow cooling or rapid cooling.

The hardness of the solid adhesive injected into the mold can be set in accordance with the shape of a feeding container filled with the solid adhesive. The hardness of the solid adhesive is measured from the value of a resistance load when a load of 0 gf to 400 gf is applied to a needle having a tip end diameter of 1.5 mm, and then, the needle is approached the surface of the solid adhesive, by a rheometer (Cardmeter-Max_ME-500, manufactured by ASKA CORPORATION).

The feeding container is filled with the solid adhesive that is obtained by the method described above, and thus, a feed type solid adhesive is obtained. In the hardness of the solid adhesive, on a coating side, a forward end of the solid adhesive appears from an opening of the feeding container, and thus, a hardness (a softness) necessary for ensuring a preferred coating amount with respect to the adherend such as paper, wood, or cloth is required. On a slider side, a hardness necessary for preventing a phenomenon in which a slider portion is torn, and thus, the solid adhesive is dropped out from the slider, and the solid adhesive is not capable of being contained in the feeding container is required. That is, in the feed type solid adhesive, a hardness satisfying the both conditions is required.

In the solid adhesive of the invention, the degree of hardness is preferably in a range of 1 × 10⁻⁵ N/cm² to 15 × 10⁻⁵ N/cm², is more preferably in a range of 3 × 10⁻⁵ N/cm² to 11 × 10⁻⁵ N/cm², and is particularly preferably in a range of 5 × 10⁻⁵ N/cm² to 7 × 10⁻⁵ N/cm², in an environment of 23°C and 60%RH. By adjusting the hardness of the solid adhesive as described above, it is possible to obtain a solid adhesive that is less likely to be dropped out from the slider while ensuring a preferred coating amount.

The solid adhesive of the invention can be used for the adhesion of paper, wood, cloth, or the like. Examples of the paper include high-quality paper, craft paper, photographic paper, envelope paper, drawing paper, coated paper, cardboard, and the like. Examples of the wood include a veneer such as a paulownia material, an Asada material, a cedar material, a birch material, and a Japanese cypress material, a laminated veneer lumber (a wooden board in which a plurality of veneers obtained by slimly slicing wood are stacked by aligning a fiber direction in the same direction, and are subjected to thermal-pressure adhesion through an adhesive), a plyboard (in which veneers are subjected to adhesion through an adhesive), a particle board (a wooden board in which a small piece obtained by cutting or crushing wood is mixed with an adhesive to be in the shape of a mat, and is subjected to thermal-pressure clamping), a fiber board (a wooden board in which a small piece obtained by steam-injecting and defibrating wood is mixed with an adhesive to be in the shape of a mat, and is subjected to thermal-pressure clamping; a medium density fiberboard (MDF), a hardboard (HB), an insulation board, and the like), OSB (in which a raw material in the shape of a thin cut piece is aligned and laminated, and is subjected to adhesion), a laminated lumber (in which sawn plates, small timbers, or the like are parallel to each other in a fiber direction, and are subjected to laminated-adhesion in a length direction, a width direction, and a thickness direction), a block board (in which a block-shaped small piece is subjected to laminated-adhesion into the shape of a plate), a wooden composite material (in which a surface-dressed lumber, a fiber mat, or the like is jointed onto one surface or both surfaces of a wooden board through an adhesive), and the like. Examples of the cloth include a woven fabric, a knitted fabric, a non-woven fabric, and the like in which a cellulose-based fiber material such as cotton and linen and a synthetic fiber material such as polyester and nylon are each independently used or are used by being mixed.

### EXAMPLES

Hereinafter, the invention will be described in more detail, by using examples and comparative examples, but the invention is not limited only to the following examples.

### (Examples 1 to 7 and Comparative Examples 1 to 6)

Each blend component was heated and stirred at a blending ratio shown in Table 1 in a mixing machine provided with a stirring machine until a sufficiently homogeneous material was obtained. Next, such a thermal material was injected into a cylindrical feeding container having an inner diameter of 16 mm (a feeding container "PiT HI-POWER S", Product Number: PT-TP, manufactured by TOMBOW PENCIL CO., LTD.). After that, cooling was performed, and thus, a feed type solid adhesive was obtained.

Each component used in Table 1 is as follows.
PGM: Propylene Glycol Monomethyl Ether
PVF-L (Polyvinyl Formal); "VINYLEC K Type", Molecular Weight: 4,400 to 54,000, Content of Hydroxyl Group of 5.75 ± 0.75% (manufactured by JNC Corporation)
PVF-H (Polyvinyl Formal); "VINYLEC E Type", Molecular Weight: 95,000 to 134,000, Content of Hydroxyl Group of 5.75 ± 0.75% (manufactured by JNC Corporation)
PVB (Polyvinyl Butyral); "S-LEC KW", Molecular Weight: 30,000 (manufactured by SEKISUI CHEMICAL CO., LTD.)
PVP-K30 (Polyvinyl Pyrrolidone); "PITZCOL K-30", Molecular Weight: 45,000 (manufactured by DKS Co. Ltd.)
PVP-K90 (Polyvinyl Pyrrolidone); "PITZCOL K-90", Molecular Weight: 1,200,000 (manufactured by DKS Co. Ltd.)
PVA (Polyvinyl Alcohol); "PVA-217", Degree of Polymerization: 1,700 (manufactured by KURARAY CO., LTD.)
Modified Dextrin (Hydroxypropylated Enzyme-Modified Dextrin): "PENON PKW" (manufactured by Nippon Starch Chemical Co., Ltd.)
Gelation Agent (Sorbit·Benzaldehyde Condensate: Dibenzylidene Sorbitol); "GEL ALL D" (manufactured by New Japan Chemical co., ltd.)

### (1) Gelation State

A total amount of the obtained solid adhesive was fed from the feeding container, and then, whether or not the solid adhesive was capable of being returned to the end was visually observed, and evaluation was performed on the basis of the following criteria.
○; Feeding and returning are capable of being performed normally.
×; Feeding and returning are not capable of being performed to the end.

### (2) State of Coated Surface

### (a) Discoloration of Wood

A paulownia material was coated with the solid adhesive, and was left to stand during a whole day and night, and then, the state of the coated surface was visually observed, and evaluation was performed on the basis of the following criteria.
○; The paulownia material is not discolored.
×; The paulownia material is discolored.

### (b) Unnoticeableness of Solid Adhesive

The paulownia material was coated with the solid adhesive and was dried, and the state of the coated surface was visually observed, and evaluation was performed on the basis of the following criteria.
○; The solid adhesive is not noticeable.
×; The color (white) of the solid adhesive is noticeable.

(3) Coating resistance, a coating amount, and an adhesive force with respect to paper, wood, and cloth were evaluated by the following method, by setting an evaluation value of a reference composition as 100.

### (a) Coating Resistance

Envelope paper (manufactured by LINTEC Corporation, a half-tone color, unit weight of 104.7 g/m²) placed on a horizontal base is installed in a push-pull gauge (DS2-500N, manufactured by IMADA SEISAKUSHO CO., LTD) such that a surface coated with the solid adhesive is approximately horizontal to a force and a measurement direction. The push-pull gauge was fixed, and the envelope paper was coated with the solid adhesive fed from the feeding container by approximately 5 mm at a load of 800 gf to 1000 gf, a speed of 10 cm/second, and an angle of 90°, in a pulling direction of the push-pull gauge, and at this time, a maximum pulling force was designated as the coating resistance. Note that, friction between the base and the envelope paper is negligibly small.

<Evaluation> A value of less than 90 with respect to 100 of the evaluation value of the reference composition was determined as excellent (having a coating resistance reduction effect and light coating feeling).

### (b) Coating Amount

An adherend that was fixed was coated with the solid adhesive fed from the feeding container by approximately 5 mm at a load of 800 gf to 1000 gf, a speed of 10 cm/second, and an angle of 90°, in a certain area, and a difference in the weight of the solid adhesive before and after coating was measured and was designated as the coating amount. Envelope paper and an MDF board were used as the adherend.

<Evaluation> A value of 100 or more and less than 200 with respect to 100 of the evaluation value of the reference composition was determined as excellent (an appropriate amount not excessively small or large).

### (c) Adhesive Force with respect to Paper

Envelope paper was coated with the solid adhesive fed from the feeding container by approximately 5 mm at a load of 800 gf to 1000 gf, a speed of 10 cm/second, and an angle of 90°, in an area of 4.5 cm × 10 cm, and immediately, envelope paper that was not coated with the solid adhesive was pressure-bonded at a load of 1000 gf such that two sheets of envelope paper were bonded, and a test piece over 8 minutes and a test piece over 10 minutes were respectively prepared.

An average value of values obtained by dividing a paper broken area at the time of peeling off two test pieces at a speed of 10 cm/second by an area coated with the solid adhesive was designated as the adhesive force with respect to paper. The measurement was performed at a temperature of 23°C and 60%RH.

<Evaluation> A value of 100 or more with respect to 100 of the evaluation value of the reference composition was determined as excellent.

### (d) Adhesive Force with respect to Wood

A paulownia material was evenly coated with the solid adhesive fed from the feeding container, in an area of 9 mm × 10 mm, a paulownia material that was not coated with the solid adhesive was pressure-bonded at a load of 1000 gf, and two paulownia materials were bonded and were left in an environment of 23°C and 60%RH during a whole day and night, and thus, a test piece was prepared.

In the test piece, two paulownia materials of the test piece were pulled at a speed of 5 mm/minutes in directions opposite to each other, in a direction parallel to the adhesive surface, by using a TENSILON universal tester (RTC-1210A, manufactured by ORIENTEC CORPORATION), and a value obtained by dividing a force (a maximum value) required until the adhesive surface was broken by the area coated with the solid adhesive was designated as the adhesive force with respect to wood.

<Evaluation> A value of 95 or more with respect to 100 of the evaluation value of the reference composition was determined as excellent.

### (e) Adhesive Force with respect to Cloth

Cloth (union cloth of polyester-cotton) was evenly coated with the solid adhesive fed from the feeding container, in an area of 25 mm × 10 mm, cloth that was not coated with the solid adhesive was pressure-bonded at a load of 1000 gf, and two sheets of cloth were bonded and were left in an environment of 23°C and 60%RH during a whole day and night, and thus, a test piece was prepared.

In the test piece, two sheets of cloth of the test piece were pulled at a speed of 5 mm/minutes in directions opposite to each other, in a direction parallel to the adhesive surface, by using a TENSILON universal tester, and a value obtained by dividing a force (a maximum value) required until the adhesive surface was broken by the area coated with the solid adhesive was designated as the adhesive force with respect to cloth.

<Evaluation> A value of 100 or more with respect to 100 of the evaluation value of the reference composition was determined as excellent.

### (4) pH

Measurement was performed by allowing a piercing pH electrode (pHTestr-10BNC, manufactured by Nikko Hansen & Co., Ltd.) to pierce the solid adhesive at 23°C.

The obtained evaluation results of the solid adhesive are collectively shown in Table 1.

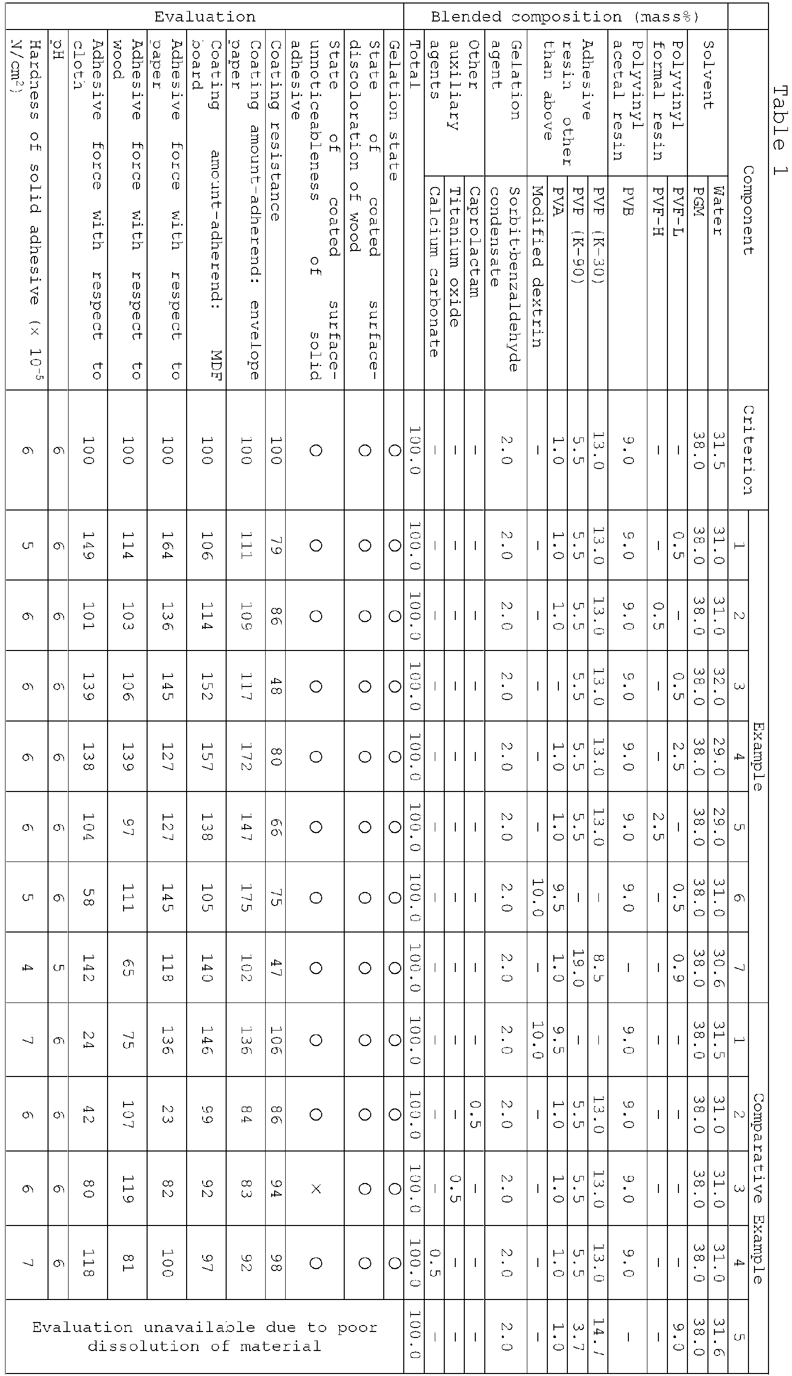

From the results of Table 1, it is found that the coating resistance reduction effect is greatly improved while performance such as adhesive properties is retained at the equivalent level or higher, by using the polyvinyl formal resin, compared to a system in which the polyvinyl butyral resin and the polyvinyl pyrrolidone resin are used together (the reference composition, Comparative Examples 2 to 4). In addition, in the case of blending caprolactam instead of the polyvinyl formal resin, the coating resistance is slightly reduced, but the adhesive force with respect to paper becomes weak (Comparative Example 2), and in the case of blending titanium oxide and calcium carbonate, the coating resistance reduction effect is not obtained (Comparative Examples 3 and 4).

### Industrial Applicability

The solid adhesive according to the invention has excellent coating finish and light coating feeling, and thus, is capable of easily adhering not only paper but also wood or cloth. The solid adhesive according to the invention is capable of adhering wood or cloth while having the same form as that of a water-based solid adhesive of the related art, and thus, is capable of being favorably used in DIY, homes, offices, factories, stores, schools, various facilities, and the like.

## Claims

1. A solid adhesive, comprising:
water;
an organic solvent;
a gelation agent; and
a polyvinyl formal resin.

2. The solid adhesive according to claim 1,
wherein a content of the polyvinyl formal resin is 0.1 mass% to 5.0 mass%, with respect to a total amount of the solid adhesive.

3. The solid adhesive according to claim 1 or 2, further containing:
at least one polyvinyl acetal resin selected from polyvinyl acetal resins other than the polyvinyl formal resin.

4. The solid adhesive according to claim 3,
wherein a ratio (a mass ratio) of the polyvinyl formal resin to the polyvinyl acetal resin is 1/99 to 50/50.

5. The solid adhesive according to claim 3 or 4,
wherein the polyvinyl acetal resin is a polyvinyl butyral resin.

6. The solid adhesive according to any one of claims 1 to 5, further comprising:
at least one adhesive component selected from the group consisting of a synthetic macromolecule and a natural macromolecule other than the above.

7. The solid adhesive according to claim 6,
wherein the adhesive component is a polyvinyl pyrrolidone resin.

8. The solid adhesive according to any one of claims 1 to 7,
wherein the gelation agent is a dibenzalide of pentavalent to hexavalent sugar alcohol.

9. A feed type solid adhesive, comprising:
a feeding container that is filled with the solid adhesive according to any one of claims 1 to 8.

10. The feed type solid adhesive according to claim 9,
wherein a hardness of the solid adhesive is in a range of 1 × 10⁻⁵ N/cm² to 15 × 10⁻⁵ N/cm².
